# EUROPEAN PATENT SPECIFICATION

(11) **EP 1 856 596 B1**
(45) Date of publication and mention of the grant of the patent: **11.11.2009**
(21) Application number: 06716686.8
(22) Date of filing: 10.03.2006
(51) Int. Cl.: G06F 3/033

(54) **COMPUTER INPUT DEVICE WITH IMPROVED CONTROL PERFOMANCE**
COMPUTEREINGABEEINRICHTUNG MIT VERBESSERTER STEUERLEISTUNGSFÄHIGKEIT
DISPOSITIF D'ENTREE INFORMATIQUE PRESENTANT UNE PERFORMANCE DE COMMANDE ACCRUE

(30) Priority: 11.03.2005 NL 1028523
(43) Date of publication of application: 21.11.2007
(73) Proprietor: Simons, Marcel Petrus, 7122 TV Aalten (NL)
(72) Inventor: Simons, Marcel Petrus, 7122 TV Aalten (NL)
(74) Representative: van Looijengoed, Ferry Antoin Theodorus
(86) International application number: PCT/NL2006/050053
(87) International publication number: WO 2006/096064

(56) References cited:
- DE-U1-202004 015 041
- US-A- 3 835 464
- US-A- 4 559 532
- US-A- 4 635 496

## Description

### FIELD OF THE INVENTION

Generally, the invention relates to the field of computer input devices for selecting an item on e.g. a display panel. An example of such an input device is a computer mouse. More specifically, the invention relates to a computer input device that is adapted for preventing injuries, such as repetitive strain injury (RSI), when operated by a human being, by improving the control performance of the computer input device.

### BACKGROUND OF THE INVENTION

A standard computer mouse may be displaced over a substrate with a horizontally held hand. The mouse can only be displaced in two dimensions, viz. over a flat substrate. The bottom of the computer mouse usually has protruding elements, typically 1 millimetre thick, consisting of a flat, smooth, plastic plate surrounded by a frame, cast from the mouse bottom, to prevent a shifting of the plate. The flat plastic plate protrudes above the frame so that only this plate is in contact with the flat substrate. The frame itself does not contact the surface.

US 4,559, 532 discloses an X-Y input device comprising a rotatable ball and a casing housing the rotatable ball. The casing has a lower opening with the rotatable ball partly projecting downwardly there through for rolling movement on a base. The casing has at least one annular projection on a lower surface thereof for rejecting foreign matter.

DE 20 2004 015041 01 a low-friction small smooth layer for applying to the base of a computer mouse. The layer is made of a technical ceramic material e.g. aluminium oxide-ceramic, having a high scratch- and wear-resistance, and having a friction-reducing, very smooth surface, and has a concavely curved surface relative to the mouse underlay, so as to reduce the support point and friction and is glued on to the bottom face of the computer mouse in place of the original smooth layer which can be dissolved away.

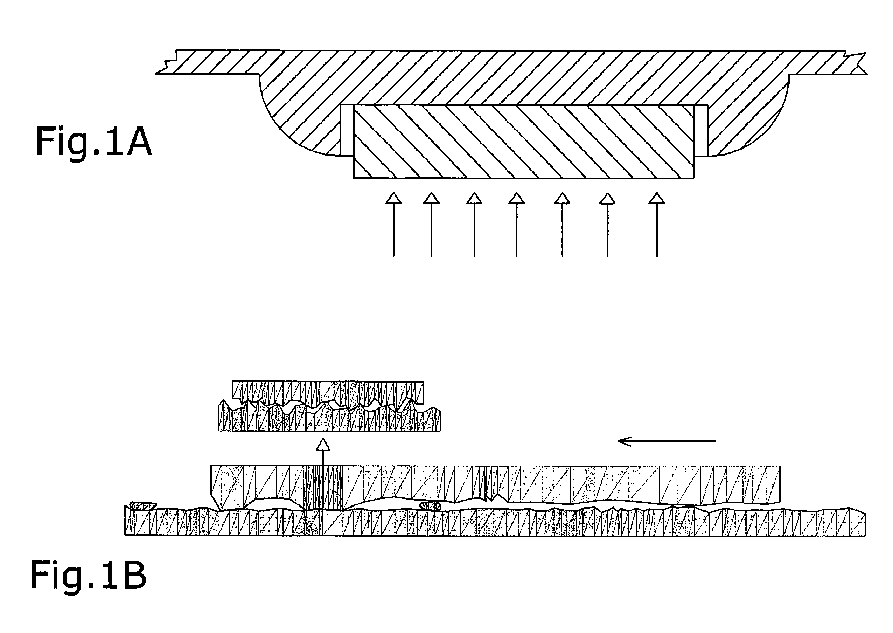

At close inspection of the interaction between the flat plate and the substrate, the irregularities of the flat plate of the leg of the standard mouse catch on the irregularities of the flat substrate. On a microscopic scale both surfaces of the flat plate and the substrate can be compared with "mountain surfaces" that lie on top of each other. This effect is illustrated in FIGS. 1A and 1B. During movement of the standard mouse, the two rough surfaces have "no time" to catch on each other and the resistance is low. As soon as the movement stops, the rough surfaces catch each other and the potential resistance is much increased. To detach the two catching surfaces from one another at the start of the mouse-displacement, a much higher force is needed (peak power) than during the continuation of the mouse displacement. After initiating mouse displacement, the muscle force must be slowed down immediately as, otherwise, the mouse overshoots the intended position.

Especially, for small, precise cursor movements this phenomenon is clearly noticeable. One has to move and slow down the mouse intermittently. The light-footed mouse must therefore be moved carefully which causes much irritation to the user. One cannot move this mouse gradually, slowly. A simple approach to roughen the substrate and/or the flat plates in order to increase the resistance does not help, as then the difference between the peak and propulsion force will only increase and the displacement will be even more jerky.

Furthermore, the phenomenon manifesta itself that the friction is not the equally large everywhere because of patches, on the substrate and on the plate, which are flatter, rougher, greasier, dryer or dirty in a varying manner. The combinations of these different patches yield different friction resistances such as e.g. the local rolling over dirt particles, slipping, catching etc. With a constant muscle force, the mouse therefore cannot be displaced with a constant speed. Because one has to position the cursor precisely on the object, a difference in displacement speed is undesirable.

Usually, a person operating a computer mouse tenses the muscles excessively, to create in this manner an internal resistance which controls/slows down the muscle movement at the same time. In addition, the cursor velocity is reduced to be able to position the cursor better. Cursor velocity may e.g. be reduced by changing the software setting for the driver of the computer mouse. For this, however, one has to displace the entire arm to be able to displace the mouse, having as a consequence that the shoulder and the body are being used as a so called "fixed bearding".

In summary, there exists a need in the art for providing a computer input device, such as a computer mouse, with an improved control performance.

### SUMMARY OF THE INVENTION

A computer input device and a protruding leg for such a device are defined in claims 1 and 8.

It has been found that the user of the computer input device of the invention experiences a regular, substantially constant, resistance in the direction opposite to the direction of movement directly after initiation of the movement of the input device over the substrate until the final position is reached. The shape of the protruding leg is such that a streamlined hole is formed in the substrate as a result of the pressing of the leg into the substrate. The streamlined hole triggers, in use, a gradual compression of the substrate material in front of a protruding element and a gradual expansion of the substrate after the protruding element has passed. Consequently, a substantially continuous mechanical resistance is experienced by the user of the input device during the entire movement of the input device over the substrate.

In order to obtain the streamlined hole in the substrate by pressing of the protruding legs during movement of the computer input device, in an embodiment of the invention the protruding legs have a bevelled and/or rounded shape. In particular, the bevel defines an angle with a horizontal line parallel to said substrate of more than 5 degrees and less than 175 degrees and/or a rounding of the protruding leg defines an angle of more than 10 degrees and less than 170 degrees, measured between the tangential line among the rounding and said horizontal line whereby the tangential line runs through the rounding on the position of the rounding where this tangential line follows the most vertical direction.

In an embodiment of the invention, the protruding leg comprises a rotatable ball at its distal end. The ball rolls in the streamlined hole during displacement of the computer input device. In this way, the friction at the bottom of the streamlined hole is strongly reduced, whereas the sidewall of the leg can press against the sidewall of the streamlined hole for a horizontal resistance.

In an embodiment of the invention, the protruding legs protrude from said device bottom over a distance of at least 2 mm. It has been found that legs of such a length are capable of sufficiently pressing into the substrate to obtain the required streamlined hole.

In an embodiment of the invention, the protruding legs are manufactured from a material or contain a coating that is sufficiently hard to avoid substantial damage of the protruding legs during use. Scratches on the protruding legs may significantly reduce the advantageous effects of the protruding legs.

It should be appreciated that the protruding legs may be provided separately from a computer input device and be arranged to snugly fit with the device bottom of the computer input device to obtain the advantage of the invention. Accordingly, the invention also pertains to a protruding leg or set of protruding legs as such that comprise attachment structures for attaching said protruding leg(s) to the device bottom of the computer input device. The attachment structures may e.g. comprise sticking surfaces or threaded extensions.

It should be noted that the above aspects and embodiments may be combined.

The invention will be further illustrated with reference to the attached drawings, which schematically show preferred embodiments according to the invention. It will be understood that the invention is not in any way restricted to these specific and preferred embodiments.

### BRIEF DESCRIPTION OF THE DRAWINGS

In the drawings:
FIGS. 1A and 1B show a schematic detail of a standard computer mouse;
FIGS. 2A-2E show schematic illustrations of shapes of a protruding leg of a computer mouse according to embodiments of the invention;
FIGS. 3A-3H show further schematic illustrations of shapes of protruding legs according to embodiments of the invention;
FIGS. 4A-4C show detailed illustrations in side view and top view of a computer mouse according to an embodiment of the invention;
FIGS. 5A and 5B show front views of a computer mouse according to an embodiment of the invention;

### DETAILED DESCRIPTION OF THE FIGURES

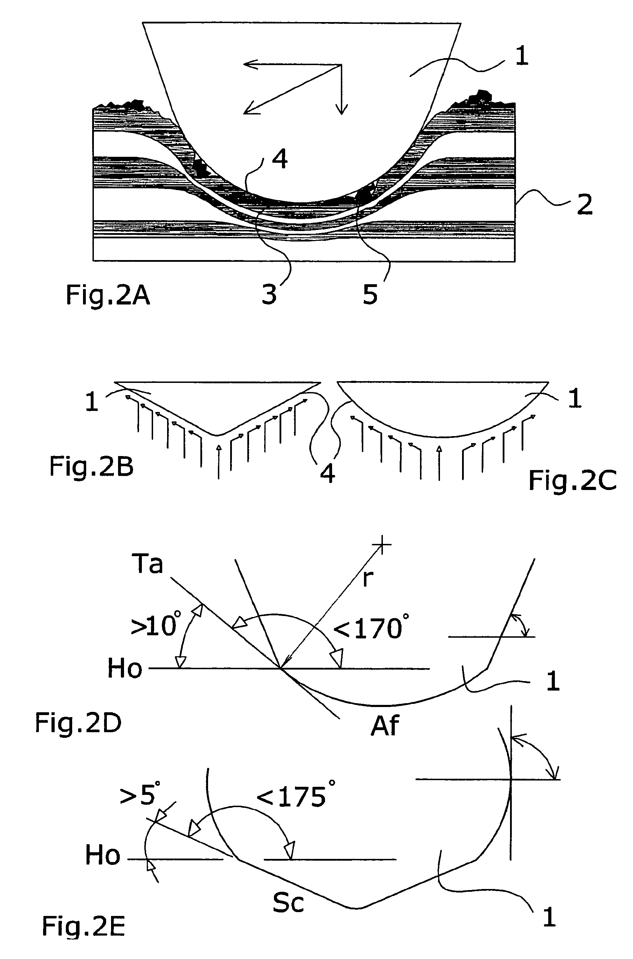

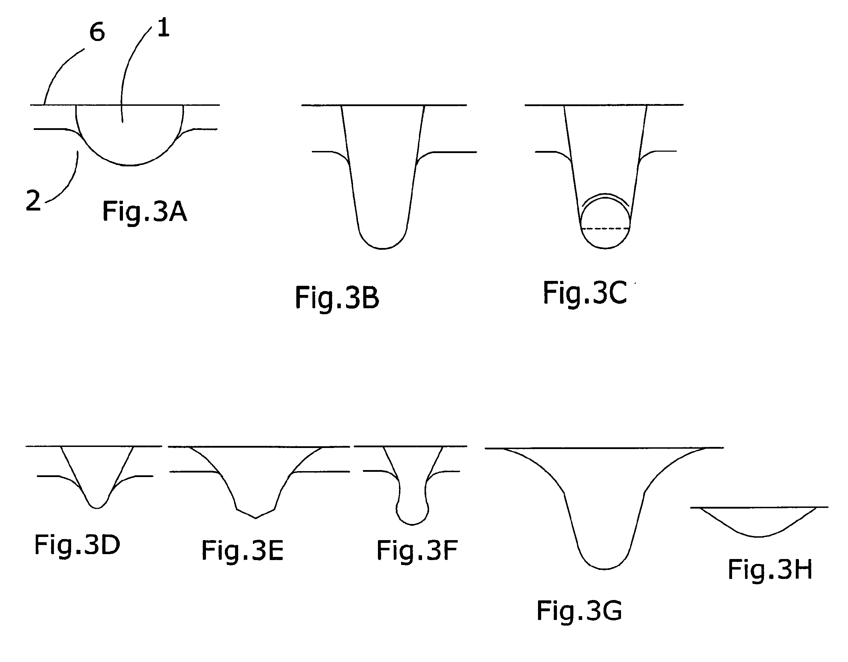

Various embodiments of the invention will now be described with reference to FIGS. 2A-2D and FIGS. 3A-3H.

FIG. 2A shows an illustration of a protruding leg 1 of a computer mouse pressed into a substrate 2. The protruding leg 1 is shaped to form a streamlined hole 3 in the substrate 2. The protruding leg 1 has a smooth and hard surface 4. The rounded leg 1 presses obliquely against the wall of the hole 3 while pressing irregularities 5 into the soft material. The leg 1 is a single part or a combination parts that are permanently attached to each other. The leg 1 has a continuous and smooth surface to form the streamline hole 1. The effect of the shape and smoothness of the protruding leg is that a finite gradual resistance is experienced by the user of the computer mouse, whereas the irregularity of the friction is not increased.

The leg 1 may e.g. be a cone of chrome plated steel.The substrate 2 can be a soft cell- or foam- rubber mat with a smooth, cloth cover or a thick elastic or deep-pile cloth or a greasy (heat resistant silicones/epdm) mat. The word "smooth" relates to a regularly and finely woven fabric, a polished/processed surface (chromium) without grooves or a greasy (carbon-containing PTFE plastic or silicone) surface. Soft means that the material can easily be deformed temporarily. It should be appreciated that the substrate 2 may have a hard base with a soft upper surface allowing the protruding legs 1 to push into the soft upper surface.

In particular with reference to FIG. 2A, the computer mouse has on its bottom hard, smooth, legs 1 (only one is shown) which are bevelled towards the end and/or are rounded. The mouse is put on a soft, homogeneous, flexible, smooth substrate 2 whereby the legs sink into the soft substrate, centring, and form a hole. The protruding, pressed-in, leg 1 can no longer easily "wobble" to all sides but is being held in position, centred.

For the standard computer mouse, the protruding elements typically have a relatively large, flat surface. In order to form a hole in the substrate on which these protruding elements rests, the user should exert a significant vertical force. Even if such a hole is formed, the protruding element will not form a streamlined hole as a result of the edges of the protruding elements. Dirt particles 5 are not pressed into the substrate 2 but gather near and collide with the edges of the protruding elements.

The shape of the legs 1 according to the invention allows the user to produce a streamlined hole in the substrate 2 without having to apply an excessive force. Dirt particles 5 are efficiently pressed into the substrate 2 and cannot collide with the legs 1 as a result of the legs 1 being free of edges.

When the mouse is moved over the substrate 2, the legs 1 work their way through the soft material of the substrate. In this process, the front side of each leg 1 first compresses the soft, flexible, homogeneous material of the substrate 2, whereafter the material of the substrate gradually passes underneath the smooth leg 1. In this way a constant mechanical resistance is experienced opposite to the direction of the displacement of the mouse.

The hard, smooth legs 1 press with the front side against the side of the hole. Here, an average pressure area is determined. Irregularities of the substrate such as dirt, bulges etc. which protrude with respect to the average substrate, are now pressed into the soft material of the wall of the hole by the hard leg 1. A smoothly polished leg will catch minimally to the irregularities of for instance a cloth substrate so that a minimum friction resistance with the substrate 2 occurs. In addition, a hard leg 1 reduces the chance of being scratched itself.

Through the computer mouse an obliquely-directed force can be pressed a) vertically in the direction of the substrate and b) horizontally against the flexible side of the hole 3 in the substrate 2. The muscles of the user can express their energy already without the mouse being displaced with respect to the substrate 2. The muscles therefore do not have to provide careful, subdued force at the beginning of a mouse displacement. The mouse will start to move when the horizontal force is larger than the flexibility of the wall of the hole 3 in the substrate 2 and the small friction between the leg 1 and the material of the substrate 2. By sensing the resistance, one knows how much force and in what direction is needed for a particular displacement.

The force of the hand of the user can be directed more or less vertically, whereby the horizontal force can be dosed accurately e.g. to a strength which just surpasses the resistance, so that the mouse can be displaced down to extremely slowly and at the same time constantly. By directing the force more vertically, the horizontal displacement velocity of the mouse becomes less or the movement is slowed down completely. By pressing the mouse extra hard against the substrate 2, the legs 1 are pressed deeper into the substrate and the resistance is increased so that the mouse can be slowed down further or can be displaced evenly and extremely slow with force.

With this computer mouse, a cursor on a display panel can be moved fast to a virtual object and can, at close proximity hereof, immediately reduce velocity to slowly and precisely position the cursor on the object. The computer mouse may have any type of tracking means to register its movement relative to the substrate 2.

In contrast, the light footed standard mouse with the 1 millimetre thick, smooth, flat protruding elements, discussed in the introduction and shown in FIGS. 1A and 1B, has protruding elements with sharp edges and transitional jumps in the surface. Consequently, the protruding elements are not capable of forming the streamlined hole. Therefore, using the standard mouse, one can only activate muscles to move the mouse and stiffen the muscles to slow down the movement again. The pressing of this standard mouse against the surface friction of a substrate only yields more irregularity in the displacement and grinds the mouse bottom against the surface. To put it differently, the standard mouse lacks control of the mouse movement in the third dimension, i.e. in the direction of the substrate 2, as is the case for the computer mouse according to the invention. Furthermore, the protruding elements of the standard mouse are relatively soft as compared to the hard surface of the legs 1 according to the embodiment of the invention.

The shape of the leg 1 is responsible for obtaining the centred, streamlined hole 3 in the substrate 2. The leg 1 may be bevelled and/or rounded to be able to centre itself in the substrate 2, press a hole 3 herein and to let the material of the substrate 2 slide gradually underneath the leg 1, i.e. from the beginning to the end of the hole 3. The leg 1 can have bevels and/or roundings at the bottom, the sides or between these two sides.

For a bevelled leg 1, the forces experienced by the leg 1 on interaction with a substrate 2 are indicated by the arrows in FIG. 2B. FIG. 2C indicates the forces for a rounded leg 1.

In FIG. 2D, a cross-section of leg 1 is shown comprising a bevelled edge and a rounded bottom. Each rounding on the leg 1 may be more than 10 degrees and less than 170 degrees. This angle is measured between the horizontal line Ho (parallel to the substrate 2) and the tangential line Ta (perpendicular to the radius r of the rounding) which run together through a crossing point on the rounding where the rounding has the most vertical direction. The tangential line Ta is determined at the rounding on the position of the rounding where this line follows the most vertical direction.

FIG. 2E shown a protruding bevelled leg 1. The bevel comprises a sloping sidewall, the angle of which may be more than 5 degrees and less than 175 degrees. This is the bevel angle between a horizontal line Ho(parallel to the substrate 2) and the bevelled plane. In contrast with rounding and bevelled features of the leg 1 of the invention, the contact area of the flat protruding elements during normal use of a standard mouse runs substantially parallel to the substrate 2.

It should be appreciated that a plurality of shapes of the legs 1 may be suitable for pressing a streamlined, centred hole 3 in a substrate 2. FIGS. 3A-3H show a variety of shapes for a leg 1 underneath a device bottom 6 of computer mouse. During use of the computer mouse, the legs 1 are such that the device bottom 6 substantially remains free from the substrate 2.

In FIG. 3A, the leg 1 comprises a semi-spherical leg fixated to the device bottom 6 of the computer mouse.

In FIG. 3B, a more elongated leg 1 rounded at its distal end is shown, mounted underneath the device bottom 6 of the computer mouse.

In FIG. 3C, the distal end of the leg 1 comprises a rotatable ball 7. The ball 7 is capable of rolling in the streamlined hole 3 during the mouse displacement. In this way, the friction at the bottom of the hole 3 is strongly reduced, whereas the sidewall of the leg 1 can press against the sidewall of the hole 2 for a horizontal resistance.

Further shapes for the protruding legs 1 are illustrated in FIGS. 3D-3H. The leg 1 can have the shape of e.g. a cone, a hollow funnel (whirlpool), a multifaceted pyramid, a stepped cone or stepped pyramid etc.

The invention seems to be a paradox because one does not want to experience resistance during the "fast" working with the mouse. However, by virtue of the resistance the mouse can be displaced more accurately and more purposefully so that the cursor speed can be increased (via the software settings of the driver) and the cursor can be positioned on its target directly. In addition the load placed on the muscles is not increased by the increased resistance but they can let flow their force more freely without additional careful, slowing down tensing. Also in other applications RSI complaints appear and the principle of the invention may be transferred to such application.

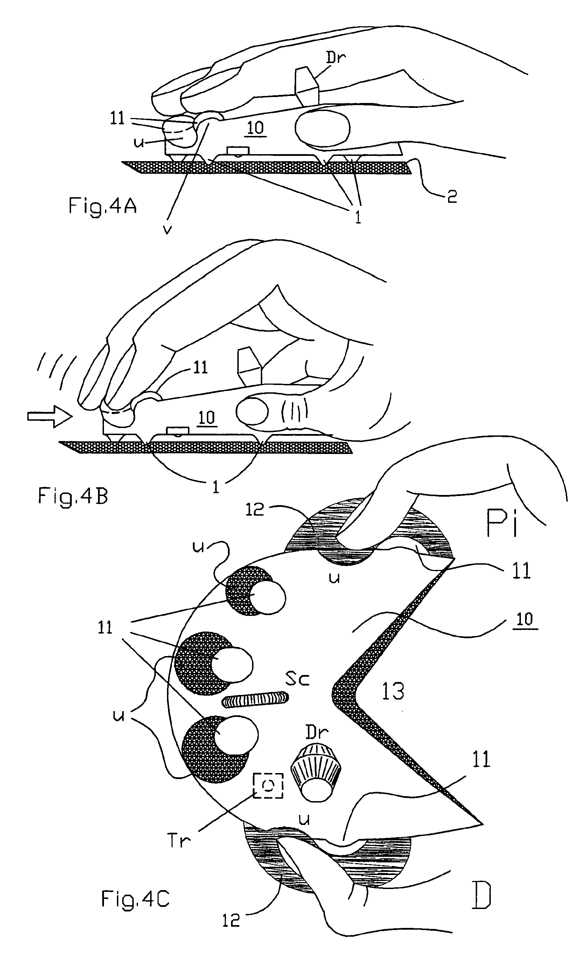

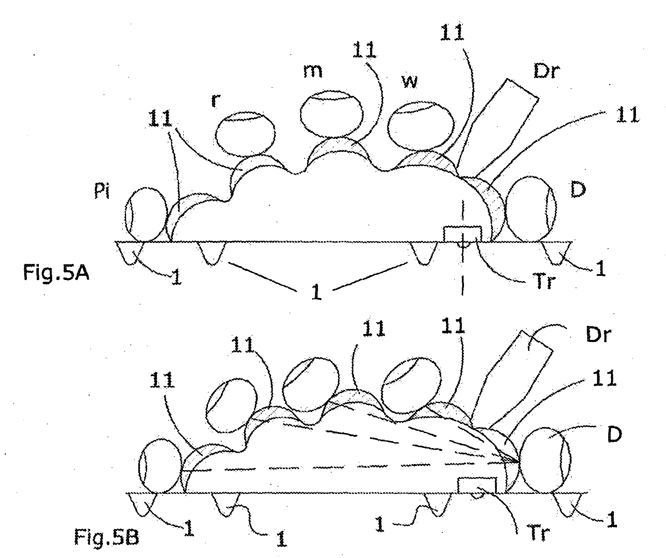

Further advantageous control features of the computer mouse according to the invention will be discussed now with reference to FIGS. 4A-4C and FIG. 5A, FIG. 5B.

Said features have advantageous effects in reducing the chance of human injuries when operating a mouse with these features. Consequently, these features can advantageously be applied in combination with the protruding legs 1 of the invention. Therefore, the features are discussed below in combination with a computer mouse having these protruding legs attached beneath the device bottom 6. However, it should be appreciated that each of these features may also be applied in a computer input device without the protruding legs 1.

In FIGS. 4A-4C, a computer mouse 10 is displayed with finger tip sized elevations, on the positions where the fingertips are supposed to lie. On these elevations, caps 11, that may be soft, rough, rounded caps, are applied (e.g. of cellular rubber, soft silicones or linatex). In addition there is a recess u around these caps 11 in the mouse housing (alternatively, one or more of the caps lie on the end of the nose of the mouse). By means of the caps 11, the fingertips can control the mouse sensitively, concentrated. In addition the fingertips can pivot over the caps at the pulling back of the mouse, as shown in FIG. 4B. The ends of the fingers and the nails therefore do not touch the housing of the mouse and therefore do not slide away, which does happen with the standard mouse. If the caps 11 are more oval-shaped, these may be referred to as strips over which the fingers can pivot.

Furthermore, the mouse housing has two flat support strips 12 on the sides on which the little finger Pi and the thumb D can rest. These strips 12 may prevent tilt of the computer mouse. It is noted that the strips 12 may have legs 1 attached to the side facing the substrate 2, as shown in FIG. 5A. These legs 1 may be provided on the strips 1 instead of the legs 1 underneath the main body of the mouse or in addition to the legs 1 underneath the main body of the mouse.

A recess 13 is provided in the back of the mouse housing and a tracking element is schematically indicated by Tr. It can be seen, in FIG. 4C, how the little finger Pi and the thumb D can easily flex/pivot without touching the mouse housing.

As shown in FIGS. 5A and 5B, the fingertips can hold the caps 11 also more to the side. In that way the thumb D and the other fingers w, m, r, and Pi can press in each others direction. The mouse 10 is thus held between the thumb D and the other fingers w, m, r, and Pi, whereas a standard mouse is held only between the thumb and the little finger.

Because the mouse 10 is held via the sensitive caps 11 and is not in contact with other parts of the hand of the user, the user is not distracted and can precisely feel each contact point between the substrate 2 and the legs 1 and follow the displacement tactily. With the standard mouse one does not recognize a contact point.

The mouse 10 comprises a tracking element Tr. The tracking can be optically (camera), magnetically (such as a magnetic pen and tablet) or mechanical (trackball) and takes place preferably directly below and between the positions for the thumb tip D and index finger tip w and not in the middle of the mouse as in the standard mouse. The thumb and index, finger can therefore orient themselves in detail to the origin of the cursor and control it accurately.

## Claims

1. A computer input device (10) comprising means for registering displacement of said device relative to a flexible substrate (2) for selection of an item on a display panel, wherein said computer input device comprises:
- a device bottom (6), intended to face said substrate in use of said computer input device while remaining substantially separated from the substrate and;
- one or more protruding legs (1) extending from said bottom
- at least one of said protruding legs comprising a hard and smooth surface (4)
**characterized in that**
- said at least, one protruding leg is shaped to be pressed into the flexible substrate, during movement in a direction relative to the flexible substrate of the computer input device, to form a substantially streamlined hole (3) defined by a wall, such that the hard and smooth surface of the protruding leg presses against the wall of the streamlined, hole to experience a regular, substantially constant resistance in a direction opposite to the direction of said movement while pressing irregularities in the flexible substrate.

2. The computer input device according to claim 1, wherein said at least one protruding leg has a polished or polished and chromed surface.

3. The computer input device according to one or more of the preceding claims, wherein said at least one protruding leg has a bevelled and/or rounded shape.

4. The computer input device according to claim 3, wherein said bevelled shape defines an angle with a horizontal line parallel to said substrate of more than 5 degrees and less than 175 degrees and/or that a rounding of the protruding leg defines an angle of more than 10 degrees and less than 170 degrees, measured between the tangential line along the rounding and said horizontal line whereby the tangential line runs through the rounding on the position of the rounding where this tangential line follows the most vertical direction.

5. The computer input device according to one or more of the preceding claims, wherein said at least one protruding leg comprises a rotatable ball at its distal end.

6. The computer input device according to one or more of the preceding claims, wherein said protruding legs protrude from said device bottom over a distance of at least 2 mm.

7. The computer input device according to claim 6, wherein said at least one protruding element is manufactured of a material that is hard relative to said substrate.

8. A protruding leg comprising a hard and smooth surface (4) **characterized in that**
- said protruding leg is shaped to be pressed into a flexible substrate, such that during movement in a direction relative to the flexible substrate a substantially streamlined hole (3) defined by a wall is formed, such that the hard and smooth surface of the protruding leg presses against the wall of the streamlined hole to experience a regular, substantially constant, resistance in a direction opposite to the direction of said movement while pressing irregularities in the flexible substrate and
- said protruding leg comprises attachment structures for attaching said protruding leg to a device bottom of a computer input device.

## Patentansprüche

1. Computereingabevorrichtung (10), aufweisend ein Mittel zum Registrieren einer Verlagerung der Vorrichtung relativ zu einem flexiblen Substrat (2) zum Auswählen eines Elements auf einem Anzeigepaneel, wobei die Computereingabevorrichtung aufweist:
einen Vorrichtungsboden (6), der dazu vorgesehen ist, dass er im Gebrauch der Computereingabevorrichtung dem Substrat zugewandt ist und dabei im Wesentlichen getrennt von dem Substrat bleibt; und
einen oder mehrere abstehende Füße (1), die sich von dem Boden erstrecken,
wobei mindestens einer der abstehenden Füße eine harte und glatte Oberfläche (4) aufweist,
**dadurch gekennzeichnet, dass**
der mindestens eine abstehende Fuß gestaltet ist, während einer Bewegung in eine Richtung relativ zu dem flexiblen Substrat der Computereingabevorrichtung in das flexible Substrat gedrückt zu werden, so dass ein im Wesentlichen stromlinienförmiges Loch (3) gebildet wird, das von einer Wand definiert ist, so dass die harte und glatte Oberfläche des abstehenden Fußes gegen die Wand des stromlinienförmigen Lochs drückt und **dadurch** einen gleichmäßigen, im Wesentlichen konstanten Widerstand in einer der Richtung der Bewegung entgegengesetzten Richtung erfährt und Unregelmäßigkeiten in dem flexiblen Substrat drückt.

2. Computereingabevorrichtung gemäß Anspruch 1, wobei der mindestens eine abstehende Fuß eine polierte oder polierte und verchromte Oberfläche hat.

3. Computereingabevorrichtung gemäß einem oder mehreren der vorangehenden Ansprüche, wobei der mindestens eine abstehende Fuß eine abgeschrägte und/oder abgerundete Form hat.

4. Computereingabevorrichtung gemäß Anspruch 3, wobei die abgeschrägte Form einen Winkel mit einer Horizontallinie parallel zu dem Substrat bildet, der größer als 5 Grad und kleiner als 175 Grad ist, und/oder eine Rundung des abstehenden Fußes einen Winkel zwischen der Tangentiallinie an die Rundung und der Horizontallinie bildet, der größer als 10 Grad und kleiner als 170 Grad ist, wobei die Tangentiallinie durch die Rundung an derjenigen Position der Rundung verläuft, an der die Tangentiallinie am meisten der vertikalen Richtung folgt.

5. Computereingabevorrichtung gemäß einem oder mehreren der vorangehenden Ansprüche, wobei der mindestens eine abstehende Fuß eine drehbare Kugel an seinem Distalende aufweist.

6. Computereingabevorrichtung gemäß einem oder mehreren der vorangehenden Ansprüche, wobei die abstehenden Füße von dem Boden über eine Distanz von mindestens 2 mm hin abstehen.

7. Computereingabevorrichtung gemäß Anspruch 6, wobei das mindestens eine abstehende Element aus einem Material hergestellt ist, das relativ zu dem Substrat hart ist.

8. Abstehender Fuß mit einer harten und glatten Oberfläche (4), **dadurch gekennzeichnet, dass**
der abstehende Fuß gestaltet ist, in ein flexibles Substrat gedrückt zu werden, so dass während einer Bewegung in eine Richtung relativ zu dem flexiblen Substrat ein im Wesentlichen stromlinienförmiges Loch (3) gebildet wird, das von einer Wand definiert ist, so dass die harte und glatte Oberfläche des abstehenden Fußes gegen die Wand des stromlinienförmigen Lochs drückt und **dadurch** einen gleichmäßigen, im Wesentlichen konstanten Widerstand in einer der Richtung der Bewegung entgegengesetzten Richtung erfährt und Unregelmäßigkeiten in dem flexiblen Substrat drückt und
der abstehende Fuß Aufsatzstrukturen zum Ansetzen des abstehenden Fußes an einen Vorrichtungsboden einer Computereingabevorrichtung aufweist.

## Revendications

1. Dispositif d'entrée informatique (10) comprenant un moyen pour enregistrer le déplacement dudit dispositif par rapport à un substrat souple (2) pour la sélection d'un élément sur un panneau d'affichage, dans lequel ledit dispositif d'entrée informatique comprend :
- un fond de dispositif (6), destiné à être en regard dudit substrat lors de l'utilisation dudit dispositif d'entrée informatique tout en restant essentiellement séparé du substrat et ;
- une ou plusieurs jambes faisant saillie (1) s'étendant à partir dudit fond
- au moins une desdites jambes faisant saillie comprenant une surface dure et lisse (4)
**caractérisé en ce que**
- ladite au moins une jambe faisant saillie est formée pour être pressée dans le substrat souple, pendant le déplacement dans une direction par rapport au substrat souple dudit dispositif d'entrée informatique, pour former un trou essentiellement profilé (3) défini par une paroi, de sorte que la surface dure et lisse de la jambe faisant saillie presse contre la paroi du trou profilé pour exercer une résistance régulière essentiellement constante dans une direction opposée à la direction dudit mouvement tout en pressant des irrégularités dans le substrat souple.

2. Dispositif d'entrée informatique selon la revendication 1, dans lequel ladite au moins une jambe faisant saillie a une surface polie ou polie et chromée.

3. Dispositif d'entrée informatique selon une ou plusieurs revendications précédentes, dans lequel ladite au moins une jambe faisant saillie a une forme biseautée et/ou arrondie.

4. Dispositif d'entrée informatique selon la revendication 3, dans lequel ladite forme biseautée définit un angle avec une ligne horizontale parallèle audit substrat supérieur à 5 degrés et inférieur à 175 degrés et/ou un arrondi de la jambe faisant saillie définit un angle supérieur à 10 degrés et inférieur à 170 degrés, mesuré entre la ligne tangentielle le long de l'arrondi et ladite ligne horizontale de sorte que la ligne tangentielle passe traverse l'arrondi à la position de l'arrondi où cette ligne tangentielle suit la direction la plus verticale.

5. Dispositif d'entrée informatique selon une ou plusieurs des revendications précédentes, dans lequel ladite au moins une jambe faisant saillie comprend une bille pouvant tourner à son extrémité distale.

6. Dispositif d'entrée informatique selon une ou plusieurs des revendications précédentes, dans lequel lesdites jambes faisant saillie font saillie à partir dudit fond de dispositif sur une distance d'au moins 2 mm.

7. Dispositif d'entrée informatique selon la revendication 6, dans lequel ledit au moins un élément faisant saillie est fabriqué d'un matériau qui est relativement dur par rapport audit substrat.

8. Jambe faisant saillie comprenant une surface dure et lisse (4) **caractérisé en ce que**
- ladite jambe faisant saillie est formée pour être pressée dans un substrat souple, de sorte que pendant le déplacement dans une direction par rapport au substrat souple, un trou essentiellement profilé (3) défini par une paroi est formé, de sorte que la surface dure et lisse de la jambe faisant saillie presse contre la paroi du trou profilé pour exercer une résistance régulière essentiellement constante dans une direction opposée à la direction dudit déplacement tout en pressant des irrégularités dans le substrat souple et
- ladite jambe faisant saillie comprend des structures de fixation pour fixer ladite jambe faisant saillie à un fond de dispositif d'un dispositif d'entrée informatique.
